(19) Europäisches Patentamt / European Patent Office / Office européen des brevets

(11) **EP 4 674 264 A1**

(12) **DEMANDE DE BREVET EUROPEEN**

(43) Date de publication:
**07.01.2026 Bulletin 2026/02**

(21) Numéro de dépôt: **25187616.5**

(22) Date de dépôt: **04.07.2025**

(51) Classification Internationale des Brevets (IPC):
**A01M 29/34** (2011.01)     **A01G 13/26** (2025.01)
**A01G 13/27** (2025.01)

(52) Classification Coopérative des Brevets (CPC):
**A01M 29/34; A01G 13/264;** A01G 13/27

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **05.07.2024 FR 2407396**
**14.11.2024 FR 2412423**

(71) Demandeur: **VIGIPALM**
**31600 Seysses (FR)**

(72) Inventeurs:
• **MÉTAIS, Ivan**
**31600 SEYSSES (FR)**
• **LANCELOT, Marie-Pierre**
**31600 SEYSSES (FR)**

(74) Mandataire: **Bringer IP**
**9, Avenue Parmentier**
**31200 Toulouse (FR)**

(54) **DISPOSITIF DE PROTECTION MECANIQUE CONTRE LES INSECTES RAVAGEURS DU PALMIER**

(57)     Filet (100) de protection d'un palmier contre les insectes ravageurs du palmier, ledit dispositif étant destiné à recouvrir un palmier s'étendant longitudinalement et présentant une toupe de diamètre D, un stipe, et une hauteur h, ladite hauteur h comprenant la hauteur du stipe et celle de la toupe dudit palmier, ledit filet de protection mécanique étant caractérisé en ce qu'il comprend un nombre n de nappes polygonales (110), lesdites nappes étant cousues entre elles sur au moins un côté d'une nappe polygonale adjacente, un moyen de fermeture (130) agencé sur au moins une nappe polygonale, ledit moyen de fermeture s'étendant sur au moins une portion de ladite nappe et une calotte supérieure (140) reliant les extrémités supérieures desdites nappes polygonales, ladite calotte étant destinée à être agencée au niveau de la toupe dudit palmier.

[Fig. 1]

EP 4 674 264 A1

## Description

### Domaine technique de l'invention

L'invention se situe dans le domaine de la lutte non chimique contre les insectes ravageurs du palmier.

Plus particulièrement, l'invention concerne un dispositif de protection mécanique, tel qu'un filet de protection, pour la lutte contre les insectes ravageurs du palmier tels que le papillon *Paysandisia archon* et un procédé de fabrication dudit filet.

### Arrière-plan technologique

Au cours des années 1990 avec des exportations de palmiers prélevés en Amérique du Sud, le papillon *Paysandisia archon* a accidentellement été introduit en Espagne avant de coloniser d'autres pays d'Europe tels que la France et l'Italie.

Le papillon se propage ainsi en Europe tant par dispersion naturelle avec le vol des papillons adulte qu'avec le transport des palmiers infestés.

Plusieurs études ont démontré que les ravages et les dégâts occasionnés étaient dus à la chenille de *P. archon.* En effet, le cycle du papillon commence par la ponte d'une femelle qui dépose ses œufs près des jeunes palmes, à la surface du stipe (tronc du palmier) principalement sur la partie supérieure du stipe, à la jonction entre le stipe et les palmes. Les œufs éclosent de chenilles après un temps d'incubation moyen de 12 à 14 jours, ce temps pouvant aller jusqu'à 1 mois si le temps est frais. Ces dernières vont alors creuser, dans un premier temps de manière insidieuse, des galeries de plusieurs dizaines de centimètres de long à l'intérieur du stipe, qu'elles nettoient quotidiennement, rejetant à l'extérieur leurs déjections.

Sur certains palmiers vigoureux (*Phoenix canariensis*), le cycle complet d'un papillon - de la ponte à la naissance d'un papillon sortant de la chrysalide - peut avoir lieu sur une seule et même palme.

Les chenilles creusent des galeries dans le stipe ou dans les nouvelles feuilles avant de s'attaquer au cœur du palmier pour s'en nourrir.

La jeune chenille fore ainsi un stipe ou une palme et se développe essentiellement durant l'automne et le printemps. Les dégâts caractéristiques et observables peuvent être parmi les suivants : présence de sciures sur la base de la couronne ou du tronc, feuilles grignotées et/ou perforées, déformation des bourgeons, déviation apicale, dessèchement de l'arbre, etc.

La mort du palmier est ainsi d'autant plus rapide que les chenilles palmivores proliférant en son intérieur sont nombreuses.

D'autres insectes ravageurs peuvent également affecter les palmiers, dont l'un des plus connus est *Rynchophorus ferrugineus*, aussi appelé charançon rouge du palmier.

Pour lutter contre ces insectes ravageurs, on retrouve actuellement trois principaux moyens de lutte : mécanique, chimique et biologique.

Parmi les moyens de lutte mécanique, on retrouve les moyens de lutte par barrière physique comprenant des enduits souples ou colles à pulvériser sur la partie haute du palmier, afin de rendre difficile la ponte des ravageurs du palmier, cependant, et pour réduire les coûts, la taille sanitaire du palmier est souvent nécessaire, ce qui a pour effet d'amplifier l'effet attractif du palmier envers le papillon *P. archon* à cause de la libération de kairomones.

On retrouve également et de manière plus classique la chasse aux papillons, avec outil de type filet de pêche, aux heures les plus chaudes de l'été - elle nécessite d'avoir l'œil, du temps, de la dextérité et des palmiers à hauteur d'Homme et constitue une technique laborieuse et éprouvante.

Par ailleurs, un assainissement par taille sanitaire plus ou moins sévère et l'élimination des tissus infestés par excavation des galeries lorsque le palmier est affecté peuvent être effectués. Cependant, cette méthode reste chronophage et nécessite une grande précision pour éviter la mort du palmier.

L'emploi de voile d'hivernage ou de filets anti-grêle, mais cela ne fonctionne pas pour plusieurs raisons. Tout d'abord, la période active du papillon de *P. Archon* est l'été soit pendant la pleine croissance du palmier. Or en appliquant un voile d'hivernage pendant cette période, le climat sous les palmes peut se retrouver modifié (hygrométrie plus forte, effet de macération...) ce qui peut poser divers problèmes pour l'arbre. En outre, les voiles d'hivernage ne permettent pas une bonne photosynthèse et sont ainsi délétères pour le palmier en période estivale. Un autre inconvénient des voiles d'hivernage repose dans le fait que ces derniers sont peu adaptés aux palmiers et ne peuvent être réemployés à souhait. Les filets anti-grêles quant à eux n'ont pas de maillage adéquat pour les insectes ravageurs, en outre l'installation d'un filet anti-grêle ne permet pas d'adopter une forme en trois dimensions englobant l'intégralité du palmier, un tel filet se déroule au-dessus des plants à protéger, ce qui n'est pas adapté pour un palmier.

Plus généralement, les filets de protection mécanique pour les arbres fruitiers ne permettent pas de s'adapter à la croissance et à la forme particulière du palmier, ces dispositifs connus ont tendance à comprimer l'arbre et sont conçus pour arbres à branches ramifiées et non des palmes.

Concernant les techniques d'ensachage, on connaît l'utilisation de ces filets ou des voiles d'hivernage pour envelopper les cimes des palmiers, mais ils ne donnent pas satisfaction, car ils provoquent une augmentation de la température et opposent souvent une résistance non négligeable pour la croissance du palmier. En outre, l'accès au tronc du palmier pour vérification est grandement entravé voir nul, ce qui ne permet pas de voir l'évolution d'une potentielle infestation. Les filets pour l'ensachage des fruits ne conviennent pas non plus, car le maillage demeure trop fin et lisse de sorte que le filet ne convient qu'aux grappes et non à l'arbre entier.

Les moyens chimiques les plus courants regroupent l'emploi d'insecticides tels que les néonicotinoïdes. Le plus connu, l'imidaclopride reste largement utilisé par les exportateurs de palmiers espagnols et italiens. En outre, ces produits chimiques sont souvent peu sélectifs sur les insectes et nuisent à la biodiversité. Ces produits subissent de plus en plus de contraintes, en raison de leurs impacts sur la santé humaine et la biodiversité, car ils touchent de nombreuses espèces non ciblées.

Enfin, les moyens biologiques consistent essentiellement en l'utilisation de champignons entomophages (*Beauveria bassiana*) ou de vers microscopiques également entomophage (Nématodes de type *Steinernema carpocapsae*).

Bien qu'efficaces, ces produits sont compliqués à mettre en œuvre, subissent le lessivage par les eaux de pluie et nécessitent de multiples applications dans le temps. Ces moyens sont également très chers, et il convient de traiter le cœur des palmiers à fréquences régulières en fonction du produit, d'avril à octobre. Pour les nématodes, leur condition d'utilisation (notamment un domaine de températures restreint) les rend inefficaces en juillet et août, période la plus propice aux pontes.

**Objectifs de l'invention**

L'invention vise à fournir un dispositif de protection mécanique efficace, durable et optimisé contre les insectes ravageurs du palmier et plus particulièrement contre le papillon *P. archon.*

L'invention vise aussi à fournir, dans au moins un mode de réalisation, un dispositif de protection mécanique démontable et réutilisable.

L'invention vise aussi à fournir, dans au moins un mode de réalisation, un dispositif de protection mécanique procurant un effet brise-vent et résistant aux déchirures.

L'invention vise également à fournir, dans au moins un mode de réalisation, un dispositif de protection mécanique esthétique, de qualité et simple de fabrication.

L'invention vise aussi à fournir, dans au moins un mode de réalisation, un dispositif de protection mécanique avec un moyen de fixation amélioré et optimisé pour les palmiers.

L'invention vise également à fournir, dans au moins un mode de réalisation, un dispositif de protection mécanique à effet répulsif.

L'invention vise aussi à fournir, dans au moins un mode de réalisation, un dispositif de protection mécanique n'entravant pas la croissance du palmier.

L'invention vise aussi à fournir, dans au moins un mode de réalisation, un dispositif de protection mécanique préventif et agissant comme un piège envers le papillon *P. archon.*

L'invention vise aussi à fournir, un filet de protection permettant de réduire le coût du matériau utilisé.

L'invention vise aussi à fournir, un filet permettant de ne pas comprimer le palmier.

**Exposé de l'invention**

Pour ce faire, l'invention concerne un filet de protection mécanique d'un palmier contre les insectes ravageurs du palmier, ledit dispositif étant destiné à recouvrir un palmier s'étendant longitudinalement et présentant une toupe de diamètre D, un stipe, et une hauteur h, ladite hauteur h comprenant la hauteur du stipe et celle de la toupe dudit palmier, ledit filet de protection mécanique étant caractérisé en ce qu'il comprend :

- un nombre n de nappes polygonales s'étendant longitudinalement et présentant au moins quatre côtés, n étant un nombre entier supérieur ou égal à 2, lesdites nappes polygonales présentant en outre une première diagonale dont la longueur L1 est définie par la relation [Math 1] suivante :

[Math 1]

$$h \leq L1 \leq 2h$$

et une deuxième diagonale, dont la longueur L2 est définie par la relation [Math 2] suivante :

[Math 2]

$$L2 = \frac{D \times \pi}{n}$$

lesdites nappes étant cousues entre elles sur au moins un côté d'une nappe polygonale adjacente ;

- un moyen de fermeture agencé sur au moins une nappe polygonale, ledit moyen de fermeture s'étendant sur au moins une portion de ladite nappe ;
- une calotte supérieure reliant les extrémités supérieures desdites nappes polygonales, ladite calotte étant destinée à être agencée au niveau de la toupe dudit palmier.

Dans tout le texte, on définit par « toupe » la frondaison sommitale du palmier, c'est-à-dire la partie feuillue de ce dernier, comprenant les palmes ou autres feuilles pennées.

Dans tout le texte, on entend par « stipe » le tronc du palmier, qui est un faux tronc au sens botanique du terme.

Dans tout le texte, on entend par « nappes polygonales » des pans de filet, de forme polygonale. En outre, la forme polygonale est celle d'un polygone régulier de type quadrilatère, préférentiellement un parallélogramme ou un losange. Par quadrilatère on entend la forme générale d'une nappe polygonale sans troncature.

Lorsque la nappe est tronquée, celle-ci peut présenter plus de quatre côtés.

Dans tout le texte en suivant, on définit le terme « troncature » par une ligne de coupe ou de pliage visant à couper où à plier un sommet d'une nappe polygonale.

L'assemblage particulier d'au moins deux nappes polygonales cousues entre elles permet ainsi une meilleure résistance à l'abrasion, aux déchirements et aux différentes contraintes mécaniques causées entre autres par la morphologie des palmiers. En effet, des espèces de palmiers comme *Rhapidophyllum hystrix* ou encore *Trithrinax campestris* peuvent être couverts d'épines, et il convient de bénéficier d'un filet de protection résistant à ces variétés.

En outre, le filet selon l'invention permet de s'adapter parfaitement aux différentes formes et tailles de palmiers grâce aux dimensions particulières des nappes faites à partir des mesures dudit palmier.

Ceci permettant d'une part d'éviter le gaspillage de matériau nécessaire à la confection du filet contrairement aux techniques d'ensachage connues, et d'autre part, de respecter la croissance et le feuillage du palmier en évitant le simple empaquetage ou emballage de ce dernier.

En effet, l'invention permet en outre de n'appliquer qu'une épaisseur de filet, en prévenant la multiplication des couches entre le palmier et l'environnement, ce qui confère moins d'ombrage sur les palmes et un aspect plus esthétique.

La calotte supérieure est un empiècement à part entière du filet lui conférant une forme idéale pour épouser la forme du palmier. En outre, la calotte supérieure est solidaire de chacune des nappes polygonales dudit filet.

La longueur L1 est comprise entre 1m et 20m, particulièrement entre 1m et 15m, et plus particulièrement entre 2m et 10m.

Avantageusement et selon l'invention, le filet comprend en outre une bandelette périphérique comprenant des moyens de serrage configurés pour serrer ledit filet de protection mécanique audit palmier, ladite bandelette périphérique étant agencée sur les extrémités inférieures desdites nappes polygonales.

La bandelette périphérique est une bande destinée à entourer tout ou partie du diamètre du stipe une fois le filet installée sur l'arbre.

Dans une variante préférée, ladite bandelette comprend en outre des œillets ou des passants et le moyen de serrage est un câble élastique, ou un tout autre moyen équivalent permettant d'ajuster et de verrouiller la position et le serrage dudit cordon.

En outre, ces moyens peuvent également comprendre des dispositifs de type bloc-cordon, des moyens élastiques tels que des câbles tendeurs, etc.

Ainsi et selon l'invention, la bandelette périphérique permet de solidariser le filet sur une portion basse du stipe pour pouvoir capturer les papillons naissant dans la partie haute du stipe. La bandelette périphérique et les moyens de serrage assurent une herméticité *à P.archon* au niveau du stipe.

Avantageusement et selon l'invention, chaque nappe polygonale présente un sommet supérieur S1 tronqué par une troncature T1 et un sommet inférieur S2 tronqué par une troncature T2, lesdits sommets inférieur S2 et supérieur S1 étant opposés et tronqués transversalement par les troncatures respectives T1 et T2.

Ainsi et selon l'invention, le filet bénéficie d'une forme plus arrondie lorsqu'il est posé sur le palmier, limitant ainsi la compression des palmes.

Avantageusement et selon l'invention, la troncature T1 présente une longueur LT1 comprise entre 0,15L1 et 0,30L1, LT1 représentant la longueur issue d'un sommet supérieur S1 et perpendiculaire à la troncature T1.

Par perpendiculaire à la troncature T1 on entend perpendiculaire à la ligne de la troncature T1.

Avantageusement et selon l'invention, la troncature T2 présente une longueur LT2 comprise entre 0,10L1 et 0,20L1, LT2 représentant la longueur issue d'un sommet inférieur S2 et perpendiculaire à la troncature T2.

Par perpendiculaire à la troncature T2 on entend perpendiculaire à la ligne de la troncature T2.

Avantageusement et selon l'invention, ladite calotte supérieure relie chaque nappe polygonale au niveau d'une troncature T1 et qu'elle présente des côtés de longueur équivalente à celle de ladite troncature T1.

Ainsi et selon l'invention, la calotte est conformée auxdites nappes polygonales et le filet peut être disposé sur l'arbre sans comprimer les palmes.

Avantageusement, ledit filet ne forme pas de pointe et procure à l'arbre de l'aisance pour le développement des palmes.

Avantageusement et selon l'invention, les nappes polygonales sont en polyoléfines.

Préférentiellement, les nappes polygonales dudit filet sont choisies parmi les polyéthylènes.

Ainsi et selon l'invention, le filet est imputrescible et bénéficie d'une meilleure résistance aux intempéries et aux conditions climatiques.

Avantageusement et selon l'invention, chaque nappe polygonale comprend un maillage compris entre 3mm et 12 mm de côté.

Dans une variante préférée, le maillage est compris entre 5mm et 10mm de côté, préférentiellement 5,5mm de côté.

Ainsi et selon l'invention, le filet permet d'empêcher spécifiquement les femelles du papillon *P. archon* de venir déposer leurs œufs sur le palmier, ces femelles présentent en effet un dimorphisme sexuel à maturité qui leur confère une taille plus grande que les mâles, généralement supérieure à 10mm.

Avantageusement et selon l'invention, le filet comprend un grammage moyen compris entre 10g/m2 et 150g/m2, préférentiellement supérieur à 90g/m2.

Avantageusement et selon l'invention, le filet comprend une polyoléfine imprégnée d'huile essentielle de conifères.

Par huile essentielle de conifères, on entend plus particulièrement les huiles essentielles de pin et de sapin comme par exemple *Pinus Sylvestris* ou *Abies balsamea* sans toutefois s'y limiter.

Cette imprégnation peut être réalisée par les techniques connues de la personne du métier, notamment par imprégnation des fibres polymères avec l'huile essentielle.

Ainsi et selon l'invention, l'invention permet de combiner un effet répulsif à la barrière mécanique du filet. Plus particulièrement, l'huile essentielle de Pin ou de Sapin permet de cibler spécifiquement le papillon ravageur du palmier *P.archon.*

En outre, le filet peut présenter des nappes polygonales d'une longueur supérieure à celle du palmier de manière à pouvoir être fixé au sol par le biais d'un moyen d'ancrage associé à la bandelette périphérique comme par exemple des piquets métalliques.

## Liste des figures

D'autres buts, caractéristiques et avantages de l'invention apparaîtront à la lecture de la description suivante donnée à titre uniquement non limitatif et qui se réfère aux figures annexées dans lesquelles :

- [Fig.1] représente une vue d'ensemble du dispositif de protection selon un mode de réalisation de l'invention lorsque ce dernier est installé sur un palmier.
- [Fig. 2] représente schématiquement une nappe polygonale selon un mode de réalisation de l'invention.
- [Fig. 3] représente schématiquement un patron possible pour la confection d'un filet selon un mode de réalisation de l'invention.

## Description détaillée d'un mode de réalisation de l'invention

Sur les figures, les échelles et les proportions ne sont pas strictement respectées, et ce, à des fins d'illustration et de clarté.

Dans toute la description détaillée qui suit en référence aux figures, sauf indication contraire, chaque élément du filet de protection selon l'invention est décrit tel qu'il est agencé lors de son emploi. En outre, le mode de réalisation décrit ci-dessous concerne un filet de protection contre le papillon *P. archon.*

Les éléments identiques, similaires ou analogues, sont désignés par les mêmes références dans toutes les figures.

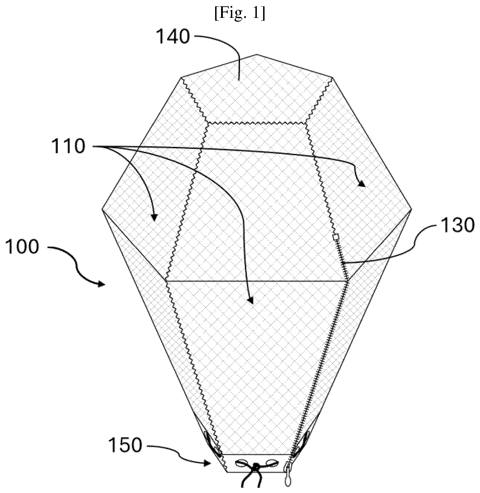

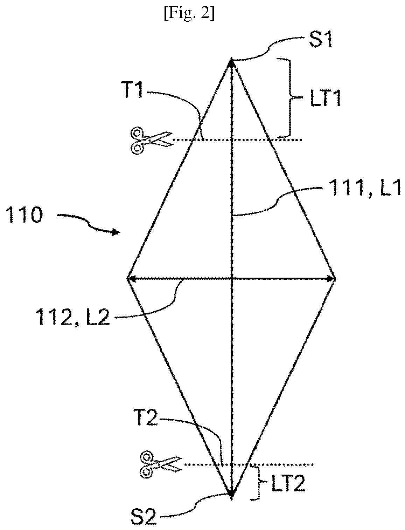

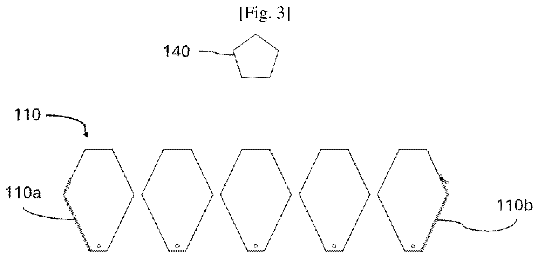

Les [Fig. 1], [Fig. 2] et [Fig. 3] concernent le même mode de réalisation du filet pour un palmier dont le diamètre D de la toupe est de 200cm et dont la hauteur h est de 160cm.

Au regard des [Fig. 1] et [Fig. 2], le filet de protection 100 comprend une pluralité de nappes polygonales 110 cousues entre elles à partir d'au moins deux côtés d'une nappe polygonale 110 adjacente. En outre, le filet comprend préférentiellement cinq nappes polygonales 100 visibles sur la [Fig. 3].

Le filet de protection 100 comprend en outre une calotte supérieure 140, présentant sensiblement une forme de pentagone régulier et cousu à chaque nappe polygonale 110 au niveau d'une troncature T1. La calotte 140 relie ainsi les extrémités supérieures de chacune des nappes polygonales 110 et est faite à partir du même matériau que celui utilisé pour la confection desdites nappes 110. Le matériau choisi pour les nappes 110 et la calotte 140 est du polyéthylène.

Le filet 100 comprend en outre une bandelette périphérique 150 présentant des œillets et un cordon de serrage comme représentés sur la [Fig. 1]. Ladite bandelette 150 est cousue sur les extrémités inférieures de chacune des nappes polygonales 110 dudit filet 100 et est destinée à entourer le diamètre du stipe du palmier une fois le filet posé et serré.

Le filet 100 comprend en outre un moyen de fermeture 130 telle qu'une fermeture à glissière faisant la liaison entre au moins un côté respectif de deux nappes polygonales adjacentes. Nonobstant les autres moyens connus de la personne du métier, la fermeture à glissière permet à un utilisateur de fermer et d'ouvrir le filet pour faciliter l'inspection et le contrôle du palmier une fois le filet 100 installé sur ledit palmier. La fermeture s'étend ainsi longitudinalement entre deux nappes polygonales adjacentes et forme une jonction réversible et supplétive de la couture réalisée.

Le filet de protection 100 comprend une pluralité de nappes polygonales dont les fibres en polyéthylène sont tissées selon les techniques connues de la personne du métier. Le filet présente un maillage carré de 5,5mm de côté et sa conception permet ainsi d'éviter la ponte des femelles du papillon *P.archon* sur le palmier une fois le filet 100 installé. La confection et l'assemblage des nappes 110 formant le filet 100 permettent l'obtention d'un filet dont la forme est spécialement conçue pour la pose sur un palmier.

Dans le mode de réalisation décrit, les nappes polygonales 110 présentent une forme générale de quadrilatère de type parallélogramme tronqué au niveau de deux sommets et présentent des diagonales perpendiculaires entre elles. Cette forme de parallélogramme sera mieux comprise au regard de la [Fig. 2].

La [Fig. 2] illustre plus en détail la conception d'une nappe polygonale 110 en forme de parallélogramme tronqué au niveau de deux sommets. Ladite nappe 110 présente deux diagonales 111 et 112, présentant respectivement une longueur L1 de 260cm et L2 de 125cm.

Deux troncatures transversales T1 et T2 sont réalisées par une découpe respective au niveau d'un sommet supérieur S1 et d'un sommet inférieur S2.

La longueur LT1 de la troncature T1 est effectuée de manière proportionnelle à la longueur L1 de la diagonale 111. Il en est de même pour la troncature T2 dont la longueur LT2 est proportionnelle à la longueur L1 de la diagonale 111. Dans l'exemple illustré LT1 présente une longueur d'environ 50cm soit environ 0,2 fois la longueur L1 de la diagonale 111 et LT2 présente une longueur d'environ 30cm soit environ 0,12 fois la longueur L1 de la diagonale 111. Une fois les troncatures T1 et T2 réalisées, la nappe 110 présente ainsi des extrémités transversales tronquées et indiquées en pointillé sur la [Fig. 2]. La nappe 110 présente ainsi six côtés une fois les troncatures T1 et T2 réalisées. En outre, lesdites nappes 110 présentent ainsi une longueur L1 de 180cm après troncature.

Les longueurs LT1 et LT2 correspondent respectivement à la hauteur d'un segment issue des sommets S1 et S2 et perpendiculaire à la ligne des troncatures respectives T1 et T2.

La calotte supérieure est ensuite cousue au niveau des troncatures T1 de chacune des nappes polygonales 110 du filet 100.

La bandelette périphérique 150 est ensuite cousue au niveau de la troncature T2 des extrémités inférieures desdites nappes polygonales.

La [Fig. 3] représente le patron du filet 100 selon le mode de réalisation décrit. Sur cette figure la bandelette et le maillage n'ont pas été représentés à des fins de clarté. En outre les nappes 110a et 100b comprennent les deux parties d'une fermeture à glissière formant le moyen de fermeture 130 et sont destinées à être cousues ensemble.

La calotte supérieure 140 est quant à elle destinée à relier l'extrémité supérieure de chaque nappe polygonale 110 et présente des côtés conformés et de longueur équivalente à celle de la ligne de troncature T1.

Dans un mode de réalisation préféré de tous, le filet 100 comprend cinq nappes polygonales 110 et la calotte supérieure 140 est un pentagone régulier dont les côtés présentent une longueur équivalente à celle d'une troncature T1, c'est-à-dire la longueur de la ligne de coupe de la troncature T1.

## Revendications

1.  Filet de protection (100) mécanique d'un palmier contre les insectes ravageurs du palmier, ledit dispositif étant destiné à recouvrir un palmier s'étendant longitudinalement et présentant une toupe de diamètre D, un stipe, et une hauteur h, ladite hauteur h comprenant la hauteur du stipe et celle de la toupe dudit palmier, ledit filet de protection mécanique étant **caractérisé en ce qu'**il comprend :

    - un nombre n de nappes polygonales (110) s'étendant longitudinalement et présentant au moins quatre côtés, n étant un nombre entier supérieur ou égal à 2, lesdites nappes polygonales présentant en outre une première diagonale (111) dont la longueur L1 est définie par la relation [Math 1] suivante :

[Math 1]

$$h \leq L1 \leq 2h$$

et une deuxième diagonale (112), dont la longueur L2 est définie par la relation [Math 2] suivante :

[Math 2]

$$L2 = \frac{D \times \pi}{n}$$

lesdites nappes (110) étant cousues entre elles sur au moins un côté d'une nappe polygonale adjacente ;

- un moyen de fermeture (130) agencé sur au moins une nappe polygonale, ledit moyen de fermeture s'étendant sur au moins une portion de ladite nappe ;
- une calotte supérieure (140) reliant les extrémités supérieures desdites nappes polygonales, ladite calotte étant destinée à être agencée au niveau de la toupe dudit palmier.

2. Filet selon la revendication 1, **caractérisé en ce qu'**il comprend en outre une bandelette périphérique (150) comprenant des moyens de serrage configurés pour serrer ledit filet de protection mécanique audit palmier, ladite bandelette périphérique étant agencée sur les extrémités inférieures desdites nappes polygonales.

3. Filet selon l'une des revendications précédentes, **caractérisé en ce que** chaque nappe polygonale (110) présente un sommet supérieur S1 tronqué par une troncature T1 et un sommet inférieur S2 tronqué par une troncature T2, lesdits sommets inférieur S2 et supérieur S1 étant opposés et tronqués transversalement par les troncatures respectives T2 et T1.

4. Filet selon la revendication 3, **caractérisé en ce que** ladite calotte supérieure relie chaque nappe polygonale au niveau d'une troncature T1 et qu'elle présente des côtés de longueur équivalente à celle de ladite troncature T1.

5. Filet selon la revendication 4, **caractérisé en ce que** la troncature T1 présente une longueur LT1 comprise entre 0,15L1 et 0,30L1, LT1 représentant la longueur issue d'un sommet supérieur S1 et perpendiculaire à la troncature T1.

6. Filet selon l'une des revendications 4 ou 5, **caractérisé en ce que** la troncature T2 présente une longueur LT2 comprise entre 0,10L1 et 0,20L1, LT2 représentant la longueur issue d'un sommet inférieur S2 et perpendiculaire à la troncature T2.

7. Filet selon l'une des revendications précédentes, **caractérisé en ce que** les nappes polygonales (110) sont en polyoléfines.

8. Filet selon l'une des revendications précédentes, caractérisé que chaque nappe polygonale (110) comprend un maillage compris entre 3mm et 12mm de côté.

9. Filet selon l'une des revendications précédentes, **caractérisé en ce qu'**il comprend des fibres imprégnées d'huile essentielle de conifère.

10. Filet selon l'une des revendications précédentes, caractérisé en que le moyen de fermeture (130) est une fermeture à glissière.

[Fig. 1]

[Fig. 2]

[Fig. 3]

140

110

110a

110b

Europäisches
Patentamt

European
Patent Office

Office européen
des brevets

**RAPPORT DE RECHERCHE EUROPEENNE**

Numéro de la demande

EP 25 18 7616

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2022/264810 A1 (THOMPSON SCOTT K [US] ET AL) 25 août 2022 (2022-08-25) | 1,2,7-10 | INV. A01M29/34 |
| A | * figures 1, 4, 10 * * alinéa [0066] - alinéa [0070] * * alinéa [0072] * * alinéa [0076] * ----- | 3-6 | A01G13/26 A01G13/27 |
| X | US 2007/062171 A1 (ROBERTS MARILYN L [CA]) 22 mars 2007 (2007-03-22) | 1,2,7-9 | |
| A | * figures 1, 2, 5-7 * * alinéa [0044] - alinéa [0046] * * alinéa [0052] * ----- | 3-6 | |
| A | US 2019/191636 A1 (LIVINGSTON SR RONNIE [US]) 27 juin 2019 (2019-06-27) * figure 1 * ----- | 1-10 | |

| DOMAINES TECHNIQUES RECHERCHES (IPC) |
|---|
| A01M A01G |

Le présent rapport a été établi pour toutes les revendications

| Lieu de la recherche | Date d'achèvement de la recherche | Examinateur |
|---|---|---|
| Munich | 27 octobre 2025 | Ketelheun, Anja |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................................

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 18 7616

27-10-2025

| Document brevet cité au rapport de recherche | Date de publication | Membre(s) de la famille de brevet(s) | Date de publication |
|---|---|---|---|
| US 2022264810 A1 | 25-08-2022 | US 2022264810 A1 | 25-08-2022 |
| | | US 2024306562 A1 | 19-09-2024 |
| | | US 2025261597 A1 | 21-08-2025 |
| US 2007062171 A1 | 22-03-2007 | CA 2559759 A1 | 15-03-2007 |
| | | US 2007062171 A1 | 22-03-2007 |
| US 2019191636 A1 | 27-06-2019 | AUCUN | |

EPO FORM P0460